(19) Europäisches Patentamt
European Patent Office
Office européen des brevets

(11) **EP 2 320 325 B1**

(12) **FASCICULE DE BREVET EUROPEEN**

(45) Date de publication et mention de la délivrance du brevet:
**12.10.2011 Bulletin 2011/41**

(51) Int Cl.:
***G06F 13/28*** *(2006.01)*

(21) Numéro de dépôt: **10181453.1**

(22) Date de dépôt: **28.09.2010**

(54) **Contrôleur d'accès direct en mémoire à sources multiples, procédé et programme d'ordinateur correspondants**

Controller mit Direktzugriff zum Speicher mit mehreren Quellen, sowie entsprechendes Verfahren und Computerprogramm

Direct access memory controller with multiple sources, corresponding method and computer program

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **08.10.2009 FR 0957033**

(43) Date de publication de la demande:
**11.05.2011 Bulletin 2011/19**

(73) Titulaire: **Commissariat à l'Énergie Atomique et aux Énergies Alternatives 75015 Paris (FR)**

(72) Inventeurs:
• **Durand, Yves**
**38330, Saint-Ismier (FR)**
• **Bernard, Christian**
**38960, Saint Etienne de Crossey (FR)**

(74) Mandataire: **Bonnet, Michel Cabinet Bonnet 93, Rue Réaumur - Boîte 10 75002 Paris (FR)**

(56) Documents cités:
**EP-A1- 0 933 926     US-A- 5 901 291**

• **ANDREWS, G. R.: "Paradigms for Process Interaction in Distributed Programs" ACM COMPUTING SUVEYS, vol. 23, no. 1, 31 mars 1991 (1991-03-31), XP040028682**

**Description**

La présente invention concerne un contrôleur d'accès direct en mémoire à sources multiples, un procédé de transfert de données depuis plusieurs sources de données vers au moins un destinataire de ces données mis en oeuvre par ce contrôleur et un programme d'ordinateur correspondant.

Un tel contrôleur, qualifié de contrôleur DMA (de l'Anglais « Direct Memory Access »), est généralement utilisé dans un dispositif de traitement de données à unité centrale de traitement tel que par exemple un circuit intégré. Il permet de transférer des données traitées ou fournies par une ou plusieurs unités centrales de traitement, en provenance de ou allant vers au moins un périphérique tel qu'un port de communication, un disque dur ou une mémoire quelconque, entre ce périphérique et une ou plusieurs mémoires locales du dispositif par exemple, sans intervention de la ou les unités centrales de traitement si ce n'est pour initier et conclure le transfert.

Un contrôleur DMA est par exemple très utile dans un système où des accès répétés à des périphériques rapides pourraient sinon presque bloquer ou au moins ralentir le traitement effectué par l'unité centrale. Sa présence optimise le temps de traitement des applications logicielles exécutées par l'unité centrale ou les unités centrales en laissant le contrôleur DMA gérer les transferts de données depuis et vers la mémoire locale.

L'invention s'applique plus particulièrement à un contrôleur d'accès direct en mémoire pour le transfert de données depuis plusieurs sources de données vers au moins un destinataire de ces données, via plusieurs mémoires tampons comprenant chacune un nombre prédéterminé d'emplacements élémentaires de mémoire successifs, le contrôleur d'accès comportant un module de gestion de lectures conçu pour lire des données stockées dans les mémoires tampons et les transférer séquentiellement vers le destinataire et des moyens de stockage de pointeurs de lecture associés respectivement à chaque mémoire tampon, chaque pointeur de lecture indiquant un emplacement élémentaire de la mémoire tampon à laquelle il est associé dans lequel une donnée peut être lue.

Un tel contrôleur DMA est par exemple décrit dans le brevet publié sous le numéro US 5,901,291. Ce brevet pose le problème, généralement non résolu, de l'ordre dans lequel les données sont transmises par le contrôleur DMA au destinataire alors qu'elles proviennent de différentes sources qui ne sont a priori pas synchronisées entre elles.

La solution apportée par ce document consiste à prévoir plusieurs mémoires tampons dans lesquelles les données sont écrites pour être ensuite lues et transmises par le contrôleur DMA au destinataire et à fournir au contrôleur DMA une liste ordonnée de ces mémoires tampons : lorsque les données de l'une des mémoires tampons sont toutes lues et transmises par le contrôleur DMA au destinataire, la lecture de la mémoire tampon suivante dans la liste ordonnée est alors déclenchée. Ainsi, il est possible de transférer les données au destinataire dans un ordre prédéterminé souhaité sans intervention de l'unité centrale ou des unités centrales à l'origine de ces données.

Mais cette solution impose au contrôleur DMA de gérer une liste ordonnée de mémoires tampons. En outre, même si les mémoires tampons de cette liste peuvent être de petite taille et en grand nombre, elles ne permettent pas de synchroniser finement plusieurs sources au-delà d'une certaine limite. Par exemple, il n'est pas raisonnable de transmettre de cette façon des données entrelacées issues de deux sources différentes.

Il peut ainsi être souhaité de prévoir un contrôleur d'accès direct en mémoire qui permette de s'affranchir des problèmes et contraintes précités.

L'invention a donc pour objet un contrôleur d'accès direct en mémoire pour le transfert de données depuis plusieurs sources de données vers au moins un destinataire de ces données, via plusieurs mémoires tampons comprenant chacune un nombre prédéterminé d'emplacements élémentaires de mémoire successifs, le contrôleur d'accès comportant un module de gestion de lectures conçu pour lire des données stockées dans les mémoires tampons et les transférer séquentiellement vers le destinataire et des moyens de stockage de pointeurs de lecture associés respectivement à chaque mémoire tampon, chaque pointeur de lecture indiquant un emplacement élémentaire de la mémoire tampon à laquelle il est associé dans lequel une donnée peut être lue, tel que, les mémoires tampons étant respectivement associées à chaque source de données, pour chaque mémoire tampon le contrôleur comporte des moyens d'exécution d'un micrologiciel de lecture de données et de mise à jour du pointeur de lecture associé à cette mémoire tampon, et il comporte des moyens de synchronisation de l'exécution des micrologiciels en fonction d'un ordre prédéterminé des données issues des mémoires tampons souhaité dans la séquence de données à transférer au destinataire.

Par micrologiciel, on entend un logiciel embarqué dans un composant matériel tel qu'un circuit intégré, plus précisément dans une mémoire volatile ou non de ce composant. Ce terme est utilisé dans la suite de la description comme une traduction du terme Anglais « firmware ».

Ainsi, en associant un micrologiciel de lecture de données et de mise à jour de pointeur de lecture à chaque mémoire tampon, elle-même affectée à une source particulière, et en synchronisant l'exécution des micrologiciels pour définir de façon déterministe l'ordre dans lequel les données provenant des différentes mémoires tampons (donc des différentes sources) doivent être transférées au destinataire, il est possible de gérer finement la séquence transférée sans avoir besoin de synchroniser le contrôleur DMA avec les sources de données et sans avoir besoin d'ordonner les mémoires tampons entre elles.

De façon optionnelle, les moyens de synchronisation comportent des moyens de transmission, d'un micrologiciel à l'autre, d'au moins un droit de lecture et de mise à jour, la détention temporaire du droit de lecture et de mise à jour par l'un des micrologiciels en cours d'exécution lui permettant d'exécuter au moins une lecture de donnée dans la mémoire tampon à laquelle il est associé et au moins une mise à jour du pointeur de lecture correspondant.

De façon optionnelle également, chaque mémoire tampon est circulaire, chaque emplacement élémentaire de l'une quelconque des mémoires tampons circulaires étant identifié par une adresse comprise entre une adresse de base et une adresse de sommet de cette mémoire tampon circulaire, les moyens de stockage comportent des pointeurs d'écriture associés respectivement à chaque mémoire tampon circulaire et indiquant chacun un emplacement élémentaire de la mémoire tampon à laquelle il est associé dans lequel une donnée peut être écrite, et le contrôleur comporte en outre un module de gestion d'écritures, conçu pour écrire des données reçues des sources dans les mémoires tampons circulaires correspondantes aux adresses indiquées par les pointeurs d'écriture correspondants, et des moyens de blocage en lecture, respectivement en écriture, dans chaque mémoire tampon circulaire en fonction des positions relatives des emplacements élémentaires indiqués par ledit pointeur de lecture et ledit pointeur d'écriture de chaque mémoire tampon circulaire.

Ainsi, les mémoires tampons circulaires remplissent chacune une fonction de tampon intermédiaire à lecture/écriture bloquante entre la source correspondante et le destinataire. Cette fonction est gérée à l'aide du pointeur de lecture et du pointeur d'écriture associés à chaque mémoire tampon circulaire par le contrôleur d'accès direct en mémoire qui possède les accès en écriture et en lecture dans chaque mémoire tampon circulaire. De cette manière, il est capable de synchroniser les flux de données entrants (flux engendrés par les sources) avec le ou les flux de données sortant(s) (flux engendré par le ou les destinataires) sans avoir besoin de se synchroniser avec une unité centrale de traitement.

De façon optionnelle également, les moyens de blocage en lecture dans l'une quelconque des mémoires tampons circulaires sont conçus pour bloquer toute lecture de donnée dans cette mémoire tampon circulaire lorsqu'une mise à jour de son pointeur de lecture fait que l'adresse vers laquelle il pointe atteint ou dépasse l'adresse vers laquelle pointe son pointeur d'écriture, et dans lequel les moyens de blocage en écriture dans l'une quelconque des mémoires tampons circulaires sont conçus pour bloquer toute écriture de donnée dans cette mémoire tampon circulaire lorsqu'une mise à jour de son pointeur d'écriture fait que l'adresse vers laquelle il pointe atteint ou dépasse l'adresse vers laquelle pointe son pointeur de lecture.

De façon optionnelle également, les moyens de stockage comportent en outre, pour chaque mémoire tampon circulaire, un pointeur de lecture dit « pointeur de travail », différent dudit pointeur de lecture associé à cette mémoire tampon circulaire, ce pointeur de travail indiquant un emplacement élémentaire de la mémoire tampon à laquelle il est associé dans lequel une donnée doit être lue, le micrologiciel associé à cette mémoire tampon circulaire étant en outre conçu pour la mise à jour du pointeur de travail à chaque lecture dans cette mémoire tampon circulaire, selon une logique de mise à jour prédéterminée.

De façon optionnelle également, la logique de mise à jour prédéterminée pour le pointeur de travail de chaque mémoire tampon circulaire comporte au moins un saut d'adresse dans cette mémoire tampon circulaire de manière à lire les données qu'elle contient dans un ordre différent de celui dans lequel elles ont été écrites.

L'invention a également pour objet un procédé de transfert de données depuis plusieurs sources de données vers au moins un destinataire de ces données, via plusieurs mémoires tampons comprenant chacune un nombre prédéterminé d'emplacements élémentaires de mémoire successifs, par un contrôleur d'accès direct en mémoire tel que défini précédemment, tel que, chaque donnée reçue de l'une quelconque des sources étant transmise par un module de gestion d'écritures vers une mémoire tampon associée à cette source et chaque donnée à transmettre au destinataire étant lue dans l'une des mémoires tampons par le contrôleur, il comporte les étapes suivantes :

- pour chaque mémoire tampon, exécution par le contrôleur d'un micrologiciel de lecture de données de cette mémoire tampon et de mise à jour d'un pointeur de lecture indiquant un emplacement élémentaire de cette mémoire tampon dans lequel une donnée peut être lue, et
- synchronisation de l'exécution des micrologiciels en fonction d'un ordre prédéterminé des données issues des mémoires tampons souhaité dans la séquence de données à transférer au destinataire.

De façon optionnelle, l'étape de synchronisation est réalisée par une circulation programmée d'au moins un droit de lecture et de mise à jour entre les différents micrologiciels en cours d'exécution, la détention temporaire du droit de lecture et de mise à jour par l'un des micrologiciels en cours d'exécution lui permettant d'exécuter au moins une lecture de donnée dans la mémoire tampon à laquelle il est associé et au moins une mise à jour du pointeur de lecture correspondant.

De façon optionnelle également, la circulation programmée du droit de lecture et de mise à jour entre les différents micrologiciels en cours d'exécution est réalisée de la façon suivante :

- chaque exécution de micrologiciel comporte au moins une étape d'attente du droit de lecture et de mise à jour selon une instruction programmée dans ce micrologiciel,

- chaque exécution de micrologiciel comporte au moins une étape de transmission du droit de lecture et de mise à jour à un autre micrologiciel en cours d'exécution après l'exécution d'au moins une lecture et d'au moins une mise à jour du pointeur de lecture associé à ce micrologiciel, selon une instruction programmée de ce micrologiciel.

Enfin, l'invention a également pour objet un programme d'ordinateur téléchargeable depuis un réseau de communication et/ou enregistré sur un support lisible par ordinateur et/ou exécutable par un contrôleur d'accès direct en mémoire, comprenant des instructions de code de programme pour l'exécution des étapes d'un procédé de transfert de données tel que défini précédemment lorsque ledit programme est exécuté par un contrôleur d'accès direct en mémoire.

L'invention sera mieux comprise à l'aide de la description qui va suivre, donnée uniquement à titre d'exemple et faite en se référant aux dessins annexés dans lesquels :

- la figure 1 représente schématiquement la structure générale d'un contrôleur d'accès direct en mémoire, selon un mode de réalisation de l'invention,
- la figure 2 illustre schématiquement le fonctionnement avantageux du contrôleur d'accès direct en mémoire de la figure 1 dans une application de transfert entrelacé de données issues de deux sources,
- les figures 3A et 3B représentent schématiquement la structure de mémoires tampons circulaires gérées par le contrôleur d'accès direct en mémoire de la figure 1, et
- la figure 4 illustre les étapes successives d'un procédé de transfert de données, selon un mode de réalisation de l'invention.

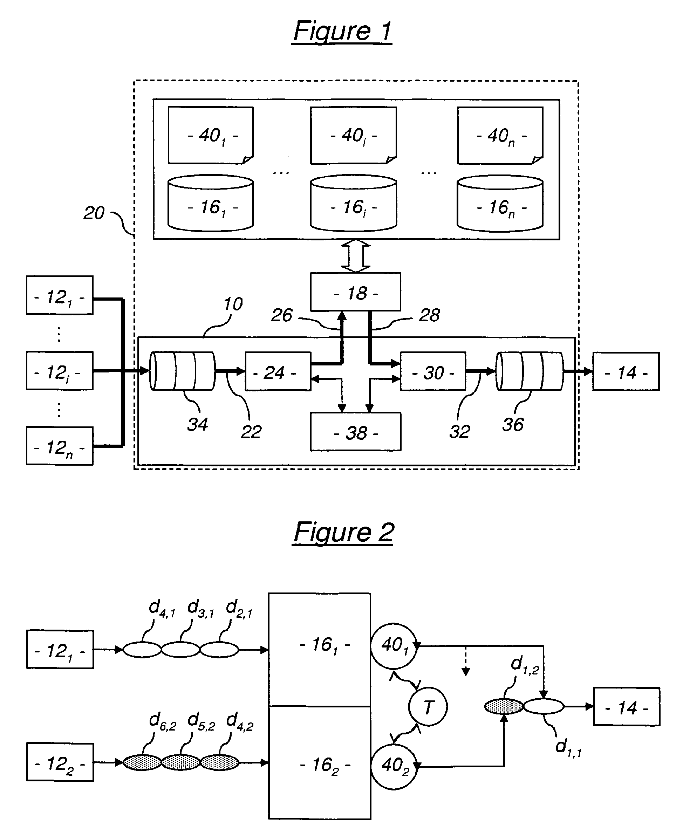

Le contrôleur d'accès direct en mémoire ou contrôleur DMA 10 représenté sur la figure 1 a pour fonction de transférer des données depuis plusieurs sources de données $12_1$, ..., $12_i$, ..., $12_n$ vers au moins un destinataire 14 de ces données via une pluralité de mémoires tampons $16_1$, ..., $16_i$, ..., $16_n$ comportant chacune un nombre prédéterminé d'emplacements élémentaires de mémoire successifs.

Pour la mise en oeuvre de l'invention, il est nécessaire que le contrôleur DMA 10 ait accès à chaque mémoire tampon $16_i$ en lecture et optionnel qu'il y ait accès en écriture. Mais dans l'exemple illustré sur la figure 1, il est apte à accéder en écriture et en lecture aux emplacements élémentaires de chaque mémoire tampon $16_i$ par l'intermédiaire d'un module 18 de commande des accès en écriture et en lecture de données s'interfaçant entre le contrôleur DMA 10 et un support de stockage intégrant les mémoires tampons $16_1$, ..., $16_i$, ..., $16_n$. On notera que dans une variante de réalisation, le contrôleur DMA, portant alors la référence 20, inclut le support de stockage intégrant les mémoires tampons $16_1$, ..., $16_i$, ..., $16_n$ et le module 18 de commande des accès en écriture et en lecture. En pratique, il peut se présenter sous la forme d'un système sur puce autonome, par exemple un circuit intégré de type CMOS.

A titre d'exemple non limitatif d'implémentation, selon une architecture envisageable dite de type NoC (de l'Anglais « Network on Chip ») ou réseau sur puce, le contrôleur DMA 10 ou 20 est considéré comme constitué d'éléments fonctionnels communiquant entre eux par l'intermédiaire de liens d'un réseau à commutation de paquets.

Conformément à cette architecture, pour réaliser le transfert de données depuis les sources $12_1$, ..., $12_i$, ..., $12_n$ vers le destinataire 14, le contrôleur DMA 10 ou 20 comporte les éléments suivants :

- un lien 22 de réception de données en provenance des sources $12_1$, ..., $12_i$, ..., $12_n$,
- un module 24 de gestion des écritures de données par le contrôleur 10 ou 20 dans les mémoires tampons $16_1$, ..., $16_i$, ..., $16_n$, ce module étant activé par des données qu'il reçoit du lien 22,
- un lien 26 d'émission de données vers les mémoires tampons $16_1$, ..., $16_i$, ..., $16_n$ pour l'écriture de ces données dans des emplacements élémentaires de ces mémoires par l'intermédiaire du module 18 de commande des accès en écriture et en lecture,
- un lien 28 de réception de données en provenance des mémoires tampons $16_1$, ..., $16_i$, ..., $16_n$ pour la lecture de ces données dans des emplacements élémentaires de ces mémoires par l'intermédiaire du module 18 de commande des accès en écriture et en lecture,
- un module 30 de gestion des lectures de données par le contrôleur 10 ou 20 dans les mémoires tampons $16_1$, ..., $16_i$, ..., $16_n$, apte à recevoir les données fournies par le lien 28, et
- un lien 32 d'émission des données lues vers le destinataire 14.

Grâce à ces éléments, le contrôleur DMA 10 ou 20 émet chaque donnée reçue d'une source $12_i$ vers la mémoire tampon $16_i$ correspondante, chaque donnée destinée à être transmise au destinataire 14 étant ensuite lue dans la mémoire tampon $16_i$ correspondante par le contrôleur DMA 10 ou 20. Les mémoires tampons $16_1$, ..., $16_i$, ..., $16_n$ remplissent ainsi une fonction de tampons intermédiaires entre les sources $12_1$, ..., $12_i$, ..., $12_n$ et le destinataire 14.

On notera que dans un autre mode de réalisation possible de l'invention non illustré, lorsque le contrôleur DMA 10 n'intègre pas les mémoires tampons $16_1$, ..., $16_i$, ..., $16_n$ et qu'il n'est pas doté du module 24 de gestion des écritures de données dans les mémoires tampons $16_1$, ..., $16_i$, ..., $16_n$, c'est-à-dire lorsqu'il n'a pas d'accès en écriture dans ces mémoires tampons, ce sont

les sources $12_1$, ..., $12_i$, ..., $12_n$ qui constituent par exemple directement ces mémoires tampons.

Les mémoires tampons $16_1$, ..., $16_i$, ..., $16_n$ peuvent être implémentées de différentes façons connues en soi, mais dans un mode de réalisation préféré, elles se présentent sous la forme de mémoires tampons circulaires.

Chaque mémoire tampon $16_i$ occupe alors un espace mémoire compris entre une adresse de base et une adresse de sommet. Un pointeur de lecture ou d'écriture associé à une mémoire tampon est incrémenté entre l'adresse de base et l'adresse de sommet de cette mémoire tampon et revient à l'adresse de base par incrémentation après avoir atteint l'adresse de sommet : c'est ce qui permet de qualifier ces mémoires tampons de « mémoires tampons circulaires ».

L'avantage de cette configuration de mémoire tampon circulaire, par exemple de type FIFO (de l'Anglais « First In First Out »), est d'éviter des contraintes de réallocation de mémoire en cas de réception de données supplémentaires, puisque tout se passe comme s'il était possible d'écrire indéfiniment des données dans une telle mémoire tant que l'adresse vers laquelle pointe un pointeur d'écriture associé à cette mémoire n'atteint pas un emplacement élémentaire dans lequel est stockée une donnée qui n'a pas encore été lue, c'est-à-dire tant que la mémoire n'est pas pleine.

Dans ce cas, de façon optionnelle, le lien 22 de réception de données comprend une mémoire tampon d'entrée 34 de type FIFO, permettant par exemple de stocker temporairement des données reçues d'une source $12_i$ alors que la mémoire tampon circulaire $16_i$ correspondante est bloquée en écriture parce qu'elle est pleine.

De façon optionnelle également, le lien 32 d'émission des données lues comprend une mémoire tampon de sortie 36 de type FIFO, permettant par exemple de stocker temporairement des données lues dans au moins l'une des mémoires tampons circulaires $16_1$, ..., $16_i$, ..., $16_n$ alors que le réseau de sortie est temporairement saturé ou que le destinataire 14 est bloqué en lecture.

Pour permettre la distribution du flux de données entrant dans le contrôleur DMA 10 ou 20 vers le destinataire 14, celui-ci comporte en outre des moyens 38 de stockage de descripteurs des mémoires tampons circulaires $16_1$, ..., $16_i$, ..., $16_n$.

Ces descripteurs comportent, pour chaque mémoire tampon circulaire $16_i$, au moins un pointeur de base PBi pointant vers une adresse de base de la mémoire tampon circulaire $16_i$ dans son support de stockage, un pointeur de sommet PSi pointant vers une adresse de sommet de la mémoire tampon circulaire $16_i$ dans son support de stockage, un pointeur d'écriture PEi pointant vers une adresse d'emplacement élémentaire de la mémoire tampon circulaire $16_i$ où une prochaine donnée reçue par le contrôleur DMA 10 ou 20 peut être écrite et un pointeur de lecture PLi pointant vers une adresse d'emplacement élémentaire de la mémoire tampon circulaire $16_i$ où une prochaine donnée peut être lue pour être transmise au destinataire 14.

Puisque chaque mémoire tampon $16_i$ est une mémoire circulaire dont la taille est définie par le nombre d'emplacements élémentaires compris entre les adresses de base et de sommet désignées par les pointeurs PBi et PSi, chaque emplacement élémentaire de cette mémoire vers lequel peuvent pointer les pointeurs d'écriture et de lecture PEi et PLi est identifié par une adresse comprise entre l'adresse de base et l'adresse de sommet.

Les pointeurs de base et de sommet PBi et PSi sont prédéterminés et destinés à rester constants alors que les pointeurs d'écriture PEi, respectivement de lecture PLi, sont variables. Ils peuvent en fait être mis à jour par incrémentation avec ou sans saut d'adresses suite à une opération d'écriture, respectivement de lecture, dans la mémoire tampon circulaire $16_i$.

Comme indiqué précédemment, la circularité de chaque mémoire tampon $16_i$ est liée au fait que lorsque son pointeur d'écriture PEi ou de lecture PLi atteint l'adresse de sommet de la mémoire, une incrémentation de ce pointeur d'un emplacement élémentaire le fait pointer sur l'adresse de base de la mémoire.

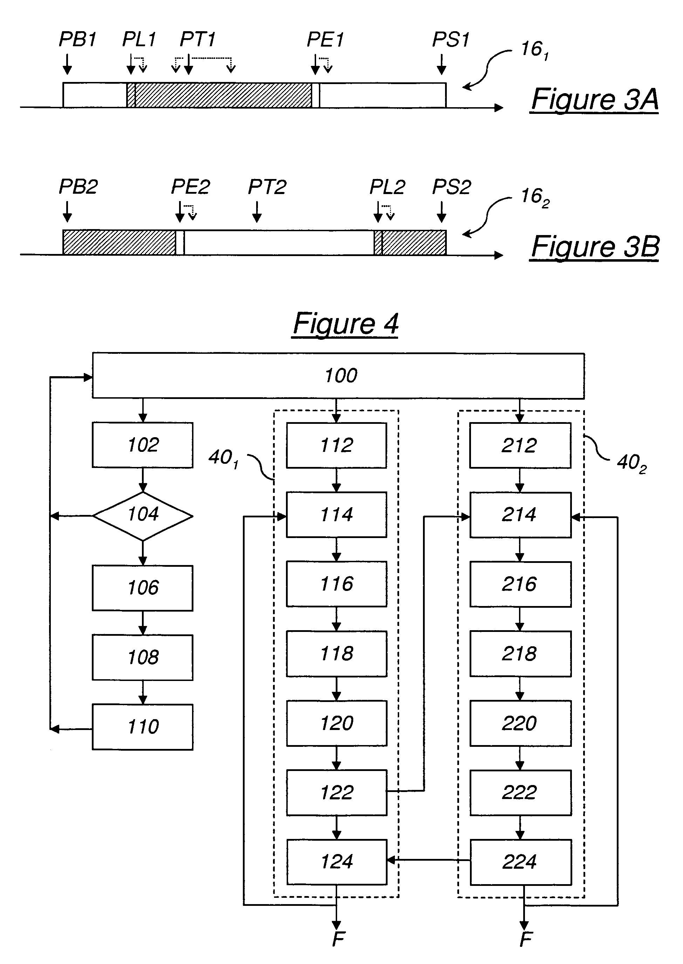

Par conséquent, les données stockées temporairement dans chaque mémoire tampon circulaire $16_i$ en attendant d'être lues par le contrôleur DMA 10 ou 20 pour être transmises au destinataire 14 sont situées entre l'adresse du pointeur de lecture PLi et l'adresse précédant celle du pointeur d'écriture PEi de cette mémoire $16_i$ dans le sens de la base vers le sommet. En revanche, l'espace mémoire situé dans la mémoire tampon circulaire $16_i$ entre l'adresse de son pointeur d'écriture PEi et l'adresse précédant celle de son pointeur de lecture PLi dans le sens de la base vers le sommet est un espace libre pour l'écriture. Cette structure de chaque mémoire tampon circulaire $16_i$ associée aux descripteurs PBi, PSi, PEi et PLi est illustrée sur les figures 3A et 3B qui seront détaillées ultérieurement.

Chaque pointeur d'écriture PEi est par exemple plus précisément destiné à être mis à jour par incrémentation d'un emplacement élémentaire dans le sens de la base vers le sommet, suite à une opération d'écriture dans la mémoire tampon circulaire $16_i$ correspondante.

En revanche, les pointeurs de lecture $PL_1$, ..., PLi, ..., PLn sont mis à jour respectivement par l'exécution de micrologiciels $40_1$, ..., $40_i$, ..., $40_n$. Ces micrologiciels $40_1$, ..., $40_i$, ..., $40_n$ sont par exemple stockés dans le même support de stockage que les mémoires tampons circulaires $16_1$, ..., $16_i$, ..., $16_n$ et sont associés respectivement à chacune d'entre elles. Ils sont exécutés par le module 30 de gestion des lectures.

Conformément à l'invention, chaque micrologiciel $40_i$ est programmé pour la lecture de données et la mise à jour du pointeur de lecture PLi de la mémoire tampon circulaire $16_i$ à laquelle il est associé. Conformément à l'invention également, le contrôleur DMA 10 ou 20 est doté de moyens de synchronisation de l'exécution

des micrologiciels $40_1$, ..., $40_i$, ..., $40_n$ en fonction d'un ordre prédéterminé des données issues des sources $12_1$, ..., $12_i$, ..., $12_n$ souhaité dans la séquence de données à transférer au destinataire 14.

Plus précisément, les moyens de synchronisation comportent par exemple des moyens de transmission, d'un micrologiciel $40_i$ à l'autre, d'au moins un droit de lecture et de mise à jour, la détention temporaire du droit de lecture et de mise à jour par l'un des micrologiciels $40_1$, ..., $40_i$, ..., $40_n$ en cours d'exécution lui permettant d'exécuter au moins une lecture de donnée dans la mémoire tampon circulaire $16_i$ à laquelle il est associé et au moins une mise à jour du pointeur de lecture PLi correspondant.

Dans un mode de réalisation simple, ce droit de lecture et de mise à jour est unique, appelé jeton et porte la référence T sur la figure 2. La notion de jeton (issue de l'Anglais « Token ») unique circulant d'objet en objet pour éviter que deux objets ne s'exécutent en même temps en informatique est connue et ne sera pas détaillée. Elle est simulée par programmation notamment à l'aide de fonctions élémentaires d'attente et de transmission du jeton.

Dans ce cas, la circulation du jeton T entre les différents micrologiciels $40_1$, ..., $40_i$, ..., $40_n$ en cours d'exécution peut être programmée dans chaque micrologiciel de la façon suivante :

- chaque micrologiciel $40_i$ comporte au moins une instruction d'attente du jeton T,
- chaque micrologiciel $40_i$ comporte au moins une instruction de transmission du jeton T à un autre micrologiciel $40_j$ en cours d'exécution après l'exécution d'au moins une lecture dans la mémoire tampon circulaire $16_i$ et d'au moins une mise à jour du pointeur de lecture PLi.

Les moyens de synchronisation résultent donc de la combinaison du module 30 de gestion des lectures et de ces instructions d'attente et de transmission du jeton intégrées dans les micrologiciels $40_1$, ..., $40_i$, ..., $40_n$ que le module 30 est apte à exécuter.

L'utilisation d'un unique jeton T comme primitive de synchronisation pour implémenter un droit de lecture et de mise à jour circulant entre les micrologiciels peut cependant s'avérer périlleuse lorsque le nombre de micrologiciels (donc de sources) augmente et que l'entrelacement des données de sortie se complexifie. D'une maladresse de programmation de la synchronisation des lectures à l'aide de ce jeton, il peut résulter en pratique des blocages ou des conflits d'exécution entre les micrologiciels.

Pour remédier à cela, l'implémentation du droit de lecture et de mise à jour peut être réalisée à l'aide de sémaphores, notamment de sémaphores binaires généralement qualifiés de mutex (de l'Anglais « Mutual Exclusion »), à raison d'un sémaphore par paire de micrologiciels. Ainsi, pour un contrôleur DMA à N sources, on définit $C_N^2$ sémaphores. Chaque sémaphore étant spécifiquement échangé entre deux micrologiciels identifiés, la gestion des conflits entre tous les micrologiciels s'en trouve simplifiée. On notera que, bien sûr, pour un contrôleur DMA à deux sources, les notions de jeton et de sémaphore binaire sont équivalentes.

Le fonctionnement avantageux du contrôleur d'accès direct en mémoire 10 ou 20 de la figure 1 est illustré sur la figure 2, dans une application particulière, simple mais non limitative. Cette application est choisie uniquement pour mettre en évidence simplement le principe de synchronisation des micrologiciels $40_1$, ..., $40_i$, ..., $40_n$ de lecture de données et de mise à jour du pointeur de lecture associé. Selon cette application, une première source de données $12_1$ fournit une séquence de données $d_{1,1}$, $d_{2,1}$, $d_{3,1}$, ... au contrôleur DMA 10 ou 20 qui stocke temporairement ces données dans la mémoire tampon circulaire $16_1$. Grâce à la mise à jour incrémentale adresse par adresse du pointeur d'écriture PE1, ces données sont stockées dans la mémoire tampon circulaire $16_1$ dans l'ordre de la séquence fournie par la source $12_1$. Une seconde source de données $12_2$ fournit une séquence de données $d_{1,2}$, $d_{2,2}$, $d_{3,2}$, ... au contrôleur DMA 10 ou 20 qui stocke temporairement ces données dans la mémoire tampon circulaire $16_2$. De même, grâce à la mise à jour incrémentale adresse par adresse du pointeur d'écriture PE2, ces données sont stockées dans la mémoire tampon circulaire $16_2$ dans l'ordre de la séquence fournie par la source $12_2$. Le contrôleur DMA doit alors transmettre au destinataire 14 les données issues des deux sources $12_1$ et $12_2$ en entrelaçant les deux séquences pour fournir une unique séquence $d_{1,1}$, $d_{1,2}$, $d_{2,1}$, $d_{2,2}$, $d_{3,1}$, $d_{3,2}$, ...

Pour que cette séquence de sortie soit fournie quel que soit le retard de l'une des sources $12_1$ ou $12_2$ par rapport à l'autre dans la transmission de ses données, les micrologiciels $40_1$ et $40_2$ associés respectivement à la mémoire tampon $16_1$ et à la mémoire tampon $16_2$ sont définis comme suit :

Micrologiciel $40_1$

*For i in 0 to n* (nombre de données à lire dans la mémoire $16_1$)
*PL1 += k ;* (mise à jour du pointeur PL1 selon un incrément prédéterminé)
*Dest = \*PL1 ;* (lecture d'une donnée et envoi au destinataire 14)
*Send T to $40_2$ ;* (transmission du jeton/mutex au micrologiciel $40_2$)
*Wait T ;* (attente du jeton/mutex)
*End for*

Micrologiciel $40_2$

*For i in 0 to n* (nombre de données à lire dans la mémoire $16_2$)

*PL2 += k ;* (mise à jour du pointeur PL2 selon un incrément prédéterminé)

*Dest = \*PL2 ;* (lecture d'une donnée et envoi au destinataire 14)

*Send T to $40_1$ ;* (transmission du jeton/mutex au micrologiciel $40_1$)

*Wait T ;* (attente du jeton/mutex)

*End for*

L'incrément k peut être égal à 1 mais peut être aussi supérieur si toutes les données fournies par chacune des sources $12_1$ et $12_2$ ne sont pas à transmettre.

Le jeton ou mutex T circule ainsi à chaque lecture d'une donnée entre les micrologiciels $40_1$ et $40_2$ pour fournir la séquence de sortie $d_{1,1}$, $d_{1,2}$, $d_{2,1}$, $d_{2,2}$, $d_{3,1}$, $d_{3,2}$, ... même si les sources ne sont pas synchronisées entre elles. En outre, cette fourniture déterministe de la séquence souhaitée en sortie se fait sans synchronisation du contrôleur DMA 10 ou 20 avec un microprocesseur quelconque.

L'entrelacement de données étant par exemple pratiqué en technologie CDMA (de l'Anglais « Code Division Multiple Access ») ou pour combiner deux trames de données MIMO (de l'Anglais « Multiple Input Multiple Output ») en lisant les données utiles tout en ignorant les données pilotes, les applications pratiques de cette synchronisation des micrologiciels $40_1$, ..., $40_i$, ..., $40_n$ par le contrôleur DMA sont nombreuses.

Il apparaît clairement que le contrôleur DMA est ainsi capable de fournir simplement et efficacement les données au destinataire 14 selon un ordre prédéterminé des sources de données quelle que soit la vitesse à laquelle celles-ci transmettent, indépendamment des autres sources, leurs données.

En combinaison avec cette fonction de gestion de l'ordre dans lequel les données issues de plusieurs sources sont fournies au destinataire, il est possible, dans un mode de réalisation particulier de l'invention, de prévoir que le contrôleur DMA puisse également remplir une fonction de synchronisation des flux entrant et sortant.

Pour mettre en oeuvre ce mode de réalisation particulier, il est nécessaire que le contrôleur DMA comporte le module 24 de gestion des écritures défini précédemment.

Dans ce cas, le module 24 de gestion des écritures de données est conçu pour permettre ou bloquer l'écriture d'une donnée dans l'une quelconque des mémoires tampons circulaires $16_i$ en fonction notamment des valeurs relatives du pointeur d'écriture PEi et du pointeur de lecture PLi. Il est également conçu pour mettre à jour le pointeur d'écriture PEi de façon automatique à l'aide d'un séquenceur en l'incrémentant d'un emplacement élémentaire. Plus précisément, dans une variante simple de ce mode de réalisation particulier de l'invention, une donnée à écrire dans la mémoire tampon circulaire $16_i$ doit être écrite à l'adresse indiquée par le pointeur d'écriture PEi ; son écriture doit être bloquée si une mise à jour du pointeur d'écriture PEi réalisée précédemment par le module 24 de gestion des écritures fait que l'adresse vers laquelle il pointe atteint ou dépasse l'adresse vers laquelle pointe le pointeur de lecture PLi (mémoire pleine).

De même, le module 30 de gestion des lectures de données est conçu pour permettre ou bloquer la lecture d'une donnée dans la mémoire tampon circulaire $16_i$ en fonction notamment des valeurs relatives du pointeur d'écriture PEi et du pointeur de lecture PLi. Il est également conçu pour mettre à jour chaque pointeur de lecture PLi par l'exécution de chaque micrologiciel $40_i$. Plus précisément, dans une variante simple de ce mode de réalisation particulier de l'invention, une donnée à lire dans la mémoire tampon circulaire $16_i$ doit être lue à l'adresse indiquée par le pointeur de lecture PLi ; sa lecture doit être bloquée si une mise à jour du pointeur de lecture PLi réalisée précédemment par le module 30 de gestion des lectures fait que l'adresse vers laquelle il pointe atteint ou dépasse l'adresse vers laquelle pointe le pointeur d'écriture PEi (mémoire vide).

Concrètement, pour que les blocages et déblocages en lecture et écriture dans l'une quelconque des mémoires tampons circulaires $16_i$ fonctionnent comme indiqué ci-dessus, le module 24 de gestion des écritures peut être programmé pour, après chaque mise à jour d'un pointeur d'écriture PEi :

- bloquer toute écriture de données dans la mémoire tampon circulaire $16_i$ si le pointeur d'écriture PEi atteint le pointeur de lecture PLi (indication que la mémoire est pleine), et
- débloquer la lecture de données dans la mémoire tampon circulaire $16_i$ si celle-ci était bloquée et que le pointeur d'écriture PEi dépasse de nouveau le pointeur de lecture PLi.

De même, le module 30 de gestion des lectures peut être programmé pour, après chaque mise à jour d'un pointeur de lecture PLi :

- bloquer toute lecture de données dans la mémoire tampon circulaire $16_i$ si le pointeur de lecture PLi atteint le pointeur d'écriture PEi (indication que la mémoire est vide), et
- débloquer l'écriture de données dans la mémoire tampon circulaire $16_i$ si celle-ci était bloquée et que le pointeur de lecture PLi dépasse de nouveau le pointeur de lecture PEi.

De cette façon, le module 24 de gestion des écritures remplit une fonction de blocage en écriture lorsque la mémoire $16_i$ est pleine et de déblocage en lecture lorsque la mémoire $16_i$ vide se remplit de nouveau. Le module 30 de gestion des lectures remplit une fonction de blocage en lecture lorsque la mémoire $16_i$ est vide et de déblocage en écriture lorsque la mémoire $16_i$ pleine se vide de nouveau.

Le fonctionnement détaillé ci-dessus des modules 24 et 30 de gestion des écritures et lectures n'est qu'un exemple de mise en oeuvre des moyens de blocage en écriture et en lecture dans les mémoires tampons circulaires $16_1$, ..., $16_i$, ..., $16_n$ à l'aide des pointeurs d'écriture et de lecture PE1, ..., PEi, ..., PEn et PL1, ..., PLi, ..., PLn. Mais il apparaîtra à l'homme du métier que d'autres implémentations ou variantes sont envisageables pour rendre les mémoires tampons circulaires $16_1$, ..., $16_i$, ..., $16_n$ à lectures et écritures bloquantes en fonction de la valeur des pointeurs d'écriture et de lecture PE1, ..., PEi, ..., PEn et PL1, ..., PLi, ..., PLn.

Ces caractéristiques rendent le contrôleur DMA 10 ou 20 capable de synchroniser le flux entrant de données en provenance des sources $12_1$, ..., $12_i$, ..., $12_n$ et les flux sortant vers le destinataire 14.

Il en résulte que, dans un circuit intégré comportant plusieurs sources de données $12_1$, ..., $12_i$, ..., $12_n$ qui sont par exemple des espaces locaux de stockage temporaire des données traitées ou utilisées par un ou plusieurs microprocesseurs, le destinataire 14 qui est par exemple un périphérique ou opérateur fonctionnel quelconque et le contrôleur DMA conforme à sa variante de réalisation 20 incluant les mémoires tampons circulaires $16_1$, ..., $16_i$, ..., $16_n$, le ou les microprocesseurs peuvent transférer des données vers les sources $12_1$, ..., $12_i$, ..., $12_n$ indépendamment des transferts réalisés par le contrôleur DMA entre ces sources et le destinataire 14.

En combinaison avec cette fonction de synchronisation du contrôleur DMA, il est possible, dans un autre mode de réalisation de l'invention et selon une première variante, de définir pour chaque mémoire tampon circulaire $16_i$ un nouveau pointeur de lecture, dit « pointeur de travail ». Ce pointeur de travail PTi est différent du pointeur de lecture PLi défini précédemment. Comme lui, il est stocké dans les moyens de stockage 38. Il est variable et destiné à être mis à jour par le micrologiciel $40_i$ après chaque opération de lecture qu'il réalise.

Sur les figures 3A et 3B qui illustrent un mode de réalisation simple à deux sources $12_1$ et $122_i$, deux pointeurs de travail PT1 et PT2 s'ajoutent aux pointeurs d'écriture PE1, PE2 et de lecture PL1 et PL2. Plus précisément, la figure 3A représente la structure de la mémoire tampon circulaire $16_1$ et la figure 3B celle, similaire, de la mémoire tampon circulaire $16_2$.

Chaque micrologiciel $40_i$ peut ainsi être défini pour que la logique de mise à jour du pointeur de travail PTi comporte au moins un saut d'adresse dans la mémoire tampon circulaire $16_i$ de manière à permette de lire les données issues de la source $12_i$ dans un ordre qui n'est pas celui de la séquence qu'elle génère. En introduisant ce nouveau pointeur PTi et la possibilité de le mettre à jour par sauts d'adresses en avant et en arrière comme illustré sur les figures 3A et 3B, dans chaque mémoire tampon circulaire $16_i$, cette mémoire tampon n'est pas utilisée comme une simple liste de type FIFO. Les pointeurs de travail PT1, ..., PTi, ..., PTn permettent au contrôleur DMA 10 ou 20 de réordonner lui-même chaque séquence des données reçues des sources $12_1$, ..., $12_i$, ..., $12_n$.

Dans cette première variante, le pointeur de lecture PLi de l'une quelconque des mémoires tampons circulaires $16_i$ est alors un pointeur de lecture à libération d'espace mémoire pour l'écriture de données. En d'autre termes, chaque fois qu'il est mis à jour, l'espace mémoire compris entre l'emplacement de l'ancienne adresse pointée et l'emplacement précédant celui de la nouvelle adresse pointée par le pointeur de lecture PLi est automatiquement libéré pour l'écriture. Cela vient du fait que, comme indiqué précédemment, l'espace mémoire situé dans la mémoire tampon circulaire $16_i$ entre l'adresse du pointeur d'écriture PEi et l'adresse précédant celle du pointeur de lecture PLi dans le sens de la base vers le sommet est considéré par principe comme un espace libre pour l'écriture.

Le pointeur de travail PTi de l'une quelconque des mémoires tampons circulaires $16_i$ est, quant à lui, un pointeur de lecture à conservation des données lues. Autrement dit, lorsqu'une donnée doit être lue dans la mémoire tampon circulaire $16_i$ pour être transmise au destinataire 14, elle est lue à l'adresse indiquée par le pointeur de travail PTi. Mais la mise à jour du pointeur de travail PTi après cette lecture ne libère pas l'emplacement élémentaire correspondant pour l'écriture. En effet, les déplacements en lecture du pointeur de travail PTi ne suivent pas nécessairement la séquence des données issues de la source $12_i$ dans l'ordre croissant des adresses. Ils sont librement prédéterminés par le micrologiciel $40_i$ dans un ordre arbitraire, de préférence entre le pointeur de lecture PLi et le pointeur d'écriture PEi. Selon les applications, une donnée lue une première fois par le pointeur de travail PTi peut notamment être relue et les données peuvent être lues dans un ordre différent de celui de leur stockage dans la mémoire tampon circulaire $16_i$.

On note donc que dans cette variante de réalisation où chaque pointeur de travail PTi est un pointeur de lecture, chaque micrologiciel $40_i$ comporte des instructions, exécutées par le module 30 de gestion des lectures, pour la mise à jour des deux pointeurs de lecture associés à la mémoire tampon circulaire $16_i$ :

- des instructions pouvant inclure des sauts d'adresse en avant et/ou en arrière selon l'application visée pour le pointeur de travail PTi,
- des instructions pouvant inclure des sauts d'adresse, mais uniquement en avant, en fonction des déplacements programmés pour le pointeur de travail PTi, pour le pointeur de lecture PLi.

En revanche, aucun des micrologiciels $40_1$, ..., $40_i$, ..., $40_n$ ne comporte d'instructions pour la mise à jour des pointeurs d'écriture PE1, ..., PEi, ..., PEn, ceux-ci étant par exemple mis à jour par un séquenceur sans saut d'adresse et de façon incrémentale à chaque opération d'écriture d'une donnée dans l'une des mémoires

tampons circulaires $16_1$, ..., $16_i$, ..., $16_n$.

On notera également que, comme illustré sur la figure 3A, les déplacements d'un pointeur de travail quelconque PTi doivent être programmés pour qu'il pointe dans la zone de la mémoire tampon circulaire $16_i$ qui comporte effectivement des données à lire. S'il l'un des pointeurs de travail pointe, après une mise à jour, à l'extérieur de cette zone (comme illustré sur la figure 3B), alors il peut être prévu selon les applications visées, soit d'engendrer un message d'erreur, soit de le bloquer à cette position jusqu'à ce que le pointeur d'écriture PEi le rattrape.

Dans une variante de réalisation symétrique de la précédente, pour réordonner la séquence de données, on pourrait aussi définir pour chaque mémoire tampon circulaire $16_i$ un nouveau pointeur de travail PTi en tant que pointeur d'écriture.

Dans cette seconde variante, le pointeur d'écriture PEi de chaque mémoire tampon circulaire $16_i$ serait un pointeur d'écriture à réservation d'espace mémoire pour l'écriture de données dans la mémoire tampon circulaire $16_i$. En d'autre termes, chaque fois qu'il serait mis à jour, l'espace mémoire compris entre l'emplacement de l'ancienne adresse pointée et l'emplacement précédant celui de la nouvelle adresse pointée par ce pointeur d'écriture PEi serait automatiquement réservé pour l'écriture. Le pointeur de travail PTi serait, quant à lui, un pointeur d'écriture effective à écriture de données dans un ordre quelconque prédéterminé dans l'espace mémoire réservé par le pointeur PEi dans la mémoire tampon circulaire $16_i$.

Mais cette seconde variante est moins intéressante à envisager que la précédente parce qu'elle est susceptible d'engendrer des blocages du côté de l'écriture des données dans les mémoires tampons circulaires $16_1$, ..., $16_i$, ..., $16_n$. Or, dans une application de transfert de données par un contrôleur DMA, on préfère gérer des blocages en aval, du côté des lectures dans les mémoires tampons circulaires, plutôt qu'en amont, côté écriture.

Un exemple de procédé de transfert de données issues de deux sources $12_1$ et $12_2$ dont les données doivent être entrelacées pouvant être mis en oeuvre par le contrôleur DMA 10 ou 20 va maintenant être détaillé, dans le contexte de la première variante de réalisation précitée, dans laquelle le contrôleur DMA est à gestion en écriture et lecture bloquantes des mémoires tampons circulaire $16_1$ et $16_2$ et dans laquelle des pointeurs de travail PT1 et PT2 sont introduits en tant que pointeurs de lecture à conservation des données lues pour chaque mémoire tampon circulaire. Les étapes successives de ce procédé sont illustrées sur la figure 4.

Ce procédé de transfert est généralisable à plus de deux sources et pas uniquement dans une application d'entrelacement de données, mais cet exemple particulier est donné en référence à la figure 4 par pur souci de fournir une explication et une illustration simples.

Au cours d'une première étape 100, le contrôleur 10 ou 20 est en attente d'instructions d'écriture ou de lecture de données dans l'une des mémoires tampons circulaires $16_i$ (dans cet exemple, i = 1 ou 2).

Cette étape 100 est suivie d'une étape 102 de déclenchement d'écriture, sur instruction d'écrire une donnée dans l'une des mémoires tampons circulaires $16_i$. Lors de cette étape de déclenchement d'écriture, le module 24 de gestion des écritures est activé. A titre d'exemple de réalisation non limitatif, il extrait des moyens de stockage 38 la valeur d'un premier descripteur de la mémoire tampon circulaire $16_i$ indiquant si l'écriture dans cette mémoire tampon est bloquée ou non.

Ensuite, au cours d'une étape de test 104, selon la valeur de ce premier descripteur, il est décidé de poursuivre ou non l'écriture de la donnée considérée dans la mémoire tampon circulaire $16_i$. Si le premier descripteur indique que l'écriture est bloquée, on passe de nouveau à l'étape 100, sinon on passe à une étape 106.

Au cours de l'étape 106, le module 24 de gestion des écritures extrait des moyens de stockage 38 l'adresse vers laquelle pointe le pointeur d'écriture PEi. Il exécute alors l'écriture de la donnée considérée dans l'emplacement élémentaire correspondant de la mémoire tampon circulaire $16_i$.

Puis, au cours d'une étape 108 de mise à jour, l'adresse pointée par le pointeur d'écriture PEi est incrémentée d'un emplacement élémentaire dans la mémoire tampon circulaire $16_i$.

Enfin, lors d'une étape 110, le module 24 de gestion des écritures extrait des moyens de stockage 38 l'adresse vers laquelle pointe le pointeur de lecture PLi puis met éventuellement à jour la valeur du premier descripteur de blocage des écritures et celle d'un second descripteur de blocage des lectures de la mémoire tampon circulaire $16_i$, dans les situations suivantes :

- si après la mise à jour de l'étape 108, l'adresse pointée par le pointeur d'écriture PEi atteint celle pointée par le pointeur de lecture PLi (indication que la mémoire $16_i$ est pleine), modification du premier descripteur pour que ce dernier indique un blocage des écritures dans la mémoire tampon circulaire $16_i$,

- si après la mise à jour de l'étape 108, l'adresse pointée par le pointeur d'écriture PEi diffère de celle pointée par le pointeur de lecture PLi alors que le second descripteur indique un blocage des lectures, modification du second descripteur pour ce dernier indique une autorisation des lectures dans la mémoire tampon circulaire $16_i$.

L'étape 110 est suivie d'un retour à l'étape 100.

L'étape 100 est aussi suivie d'une étape 112 de déclenchement d'une lecture d'une séquence de données dans la mémoire tampon circulaire $16_1$ sur activation du micrologiciel $40_1$. Cette étape d'activation est exécutée par le module 30 de gestion des lectures. A titre d'exemple de réalisation non limitatif, il extrait des moyens de stockage 38 la valeur du second descripteur de la mémoire tampon circulaire $16_1$ indiquant si la lec-

ture dans cette mémoire tampon est bloquée ou non.

Ensuite, au cours d'une étape de test 114, le module 30 de gestion des lectures détermine si le destinataire 14 est prêt à recevoir une donnée. Ce test peut être fait de plusieurs façons. Si le contrôleur DMA 10 ou 20 comporte le tampon de sortie 36, alors il peut être considéré qu'un transfert de donnée peut être effectué tant que ce tampon de sortie 36 n'est pas plein. A défaut ou en complément, un protocole de communication classique peut prévoir que le destinataire 14 informe le contrôleur DMA 10 ou 20 de sa capacité à recevoir des données par des messages au format prédéterminé. Si le transfert d'une donnée au destinataire 14 n'est pas possible, l'exécution du micrologiciel $40_1$ reste bloquée à l'étape 114. On ne passe à l'étape suivante 116 que lorsque le destinataire est de nouveau prêt à recevoir une donnée, soit parce que le tampon de sortie 36 se vide, soit parce qu'un message informant que le destinataire peut recevoir des données est reçu par le contrôleur DMA.

L'étape 116 est de nouveau une étape de test. Au cours de cette étape, selon la valeur du second descripteur, il est décidé de poursuivre ou non la lecture d'une donnée dans la mémoire tampon circulaire $16_1$. Si le second descripteur de cette mémoire $16_1$ indique que la lecture est bloquée, l'exécution du micrologiciel $40_1$ reste bloquée à l'étape 116, sinon on passe à l'étape suivante 118. On reste bloqué à l'étape 116 tant qu'une écriture de donnée dans la mémoire tampon circulaire $16_1$ ne change pas la valeur de son second descripteur (étape 110).

L'étape 118 est une étape de lecture dans la mémoire tampon circulaire $16_1$ et de mise à jour du pointeur de travail PT1 et éventuellement de mise à jour du pointeur de lecture PL1 selon les instructions du micrologiciel $40_1$.

Ensuite, lors d'une étape 120, le module 30 de gestion des lectures met éventuellement à jour la valeur du premier descripteur de blocage des écritures et celle du second descripteur de blocage des lectures de la mémoire tampon circulaire $16_1$, dans les situations suivantes :

- si après la mise à jour de l'étape 118, l'adresse pointée par le pointeur de lecture PL1 atteint celle pointée par le pointeur d'écriture PE1 (indication que la mémoire $16_1$ est vide), modification du second descripteur pour que ce dernier indique un blocage des lectures dans la mémoire tampon circulaire $16_1$,
- si après la mise à jour de l'étape 118, l'adresse pointée par le pointeur de lecture PL1 diffère de celle pointée par le pointeur d'écriture PE1 alors que le premier descripteur indique un blocage des écritures, modification du premier descripteur pour que ce dernier indique une autorisation des écritures dans la mémoire tampon circulaire $16_1$.

L'étape 120 est suivie d'une étape 122 de transmission d'un jeton T (ou mutex) au micrologiciel $40_2$.

L'étape 122 est suivie d'une étape 124 d'attente du jeton T. Le micrologiciel $40_1$ reste bloqué à cette étape tant qu'il ne reçoit pas le jeton d'un autre micrologiciel en cours d'exécution, en l'occurrence le micrologiciel $40_2$. Dès qu'il reçoit le jeton T, un compteur de lecture de la séquence de données issues de la source $12_1$ est incrémenté et on revient à l'étape 114 tant que toute la séquence n'a pas été lue. Lorsque toute la séquence souhaitée est lue, l'exécution du micrologiciel $40_1$ s'achève (F).

L'étape 100 est aussi suivie d'une étape 212 de déclenchement d'une lecture d'une séquence de données dans la mémoire tampon circulaire $16_2$ sur activation du micrologiciel $40_2$. Cette étape d'activation est exécutée par le module 30 de gestion des lectures. A titre d'exemple de réalisation non limitatif, il extrait des moyens de stockage 38 la valeur du second descripteur de la mémoire tampon circulaire $16_2$ indiquant si la lecture dans cette mémoire tampon est bloquée ou non.

L'étape 212 est suivie d'une étape 214 d'attente du jeton T. Le micrologiciel $40_2$ reste bloqué à cette étape tant qu'il ne reçoit pas le jeton d'un autre micrologiciel en cours d'exécution, en l'occurrence le micrologiciel $40_1$. Dès qu'il reçoit le jeton T, on passe à une étape de test 216.

Au cours de cette étape de test 216, le module 30 de gestion des lectures détermine si le destinataire 14 est prêt à recevoir une donnée. Cette étape est identique à l'étape 114 précédemment décrite. L'exécution du micrologiciel $40_2$ reste bloquée à cette étape tant que le transfert d'une donnée au destinataire 14 n'est pas possible.

L'étape suivante 218 est de nouveau une étape de test. Au cours de cette étape, selon la valeur du second descripteur de la mémoire tampon circulaire $16_2$, il est décidé d'y poursuivre ou non la lecture d'une donnée. Si le second descripteur de cette mémoire $16_2$ indique que la lecture est bloquée, l'exécution du micrologiciel $40_2$ reste bloquée à l'étape 218, sinon on passe à l'étape suivante 220. On reste bloqué à l'étape 218 tant qu'une écriture de donnée dans la mémoire tampon circulaire $16_2$ ne change pas la valeur de son second descripteur (étape 110).

L'étape 220 est une étape de lecture dans la mémoire tampon circulaire $16_2$ et de mise à jour du pointeur de travail PT2 et éventuellement de mise à jour du pointeur de lecture PL2 selon les instructions du micrologiciel $40_2$.

Ensuite, lors d'une étape 222, le module 30 de gestion des lectures met éventuellement à jour la valeur du premier descripteur de blocage des écritures et celle du second descripteur de blocage des lectures de la mémoire tampon circulaire $16_2$, dans les situations suivantes :

- si après la mise à jour de l'étape 220, l'adresse pointée par le pointeur de lecture PL2 atteint celle pointée par le pointeur d'écriture PE2 (indication que la mémoire $16_2$ est vide), modification du second descripteur pour que ce dernier indique un blocage des lectures dans la mémoire tampon circulaire $16_2$,

- si après la mise à jour de l'étape 220, l'adresse pointée par le pointeur de lecture PL2 diffère de celle pointée par le pointeur d'écriture PE2 alors que le premier descripteur indique un blocage des écritures, modification du premier descripteur pour que ce dernier indique une autorisation des écritures dans la mémoire tampon circulaire $16_2$.

L'étape 222 est suivie d'une étape 224 de transmission du jeton T au micrologiciel $40_1$. Dès que le jeton T est transmis, un compteur de lecture de la séquence de données issues de la source $12_2$ est incrémenté et on revient à l'étape d'attente 214 tant que toute la séquence n'a pas été lue. Lorsque toute la séquence souhaitée est lue, l'exécution du micrologiciel $40_2$ s'achève (F).

Il va de soi que l'exécution des micrologiciels de lecture dans les mémoires tampons circulaires et des écritures dans ces mêmes mémoires tampons circulaires peuvent être gérées indépendamment et en parallèle par le contrôleur DMA 10 ou 20. Cela ne change rien à la séquence des données transmise au destinataire qui est déterminée par la circulation du jeton T (ou plus généralement de sémaphores) entre les micrologiciels de lecture.

Il apparaît ainsi clairement que le contrôleur d'accès direct en mémoire décrit précédemment et son fonctionnement pour le transfert de données permettent de gérer simplement le transfert de données depuis plusieurs sources vers au moins un destinataire, en respectant un ordre prédéterminé des données à transmettre par le contrôleur DMA au destinataire.

On notera aussi que l'invention ne se limite pas aux modes de réalisation envisagés. Notamment, dans ce qui précède, pour simplifier la description il a été envisagé une application où le transfert se fait à destination d'un seul destinataire, mais le principe de l'invention s'applique de la même manière avec plusieurs destinataires.

## Revendications

1. Contrôleur d'accès direct en mémoire (10, 20) pour le transfert de données depuis plusieurs sources ($12_1$, ..., $12_i$, ..., $12_n$) de données vers au moins un destinataire (14) de ces données, via plusieurs mémoires tampons ($16_1$, ..., $16_i$, ..., $16_n$) comprenant chacune un nombre prédéterminé d'emplacements élémentaires de mémoire successifs, le contrôleur d'accès comportant un module (30) de gestion de lectures conçu pour lire des données stockées dans les mémoires tampons ($16_1$, ..., $16_i$, ..., $16_n$) et les transférer séquentiellement vers le destinataire (14) et des moyens (38) de stockage de pointeurs de lecture (PL1, PL2) associés respectivement à chaque mémoire tampon, chaque pointeur de lecture indiquant un emplacement élémentaire de la mémoire tampon à laquelle il est associé dans lequel une donnée peut être lue, **caractérisé en ce que**, les mémoires tampons ($16_1$, ..., $16_i$, ..., $16_n$) étant respectivement associées à chaque source ($12_1$, ..., $12_i$, ..., $12_n$) de données, pour chaque mémoire tampon le contrôleur (10, 20) comporte des moyens d'exécution d'un micrologiciel ($40_1$, ..., $40_i$, ..., $40_n$) de lecture de données et de mise à jour du pointeur de lecture associé à cette mémoire tampon, et **en ce qu'**il comporte des moyens (30, $40_1$, ..., $40_1$, ..., $40_n$) de synchronisation de l'exécution des micrologiciels en fonction d'un ordre prédéterminé des données issues des mémoires tampons souhaité dans la séquence de données à transférer au destinataire.

2. Contrôleur d'accès direct en mémoire (10, 20) selon la revendication 1, dans lequel les moyens de synchronisation (30, $40_1$, ..., $40_i$, ..., $40_n$) comportent des moyens de transmission, d'un micrologiciel à l'autre, d'au moins un droit de lecture et de mise à jour, la détention temporaire du droit de lecture et de mise à jour par l'un des micrologiciels ($40_1$, ..., $40_i$, ..., $40_n$) en cours d'exécution lui permettant d'exécuter au moins une lecture de donnée dans la mémoire tampon ($16_1$, ..., $16_i$, ..., $16_n$) à laquelle il est associé et au moins une mise à jour du pointeur de lecture (PL1, PL2) correspondant.

3. Contrôleur d'accès direct en mémoire (10, 20) selon la revendication 1 ou 2, dans lequel chaque mémoire tampon ($16_1$, ..., $16_i$, ..., $16_n$) est circulaire, chaque emplacement élémentaire de l'une quelconque des mémoires tampons circulaires étant identifié par une adresse comprise entre une adresse de base (PB1, PB2) et une adresse de sommet (PS1, PS2) de cette mémoire tampon circulaire, les moyens de stockage (38) comportent des pointeurs d'écriture (PE1, PE2) associés respectivement à chaque mémoire tampon circulaire et indiquant chacun un emplacement élémentaire de la mémoire tampon à laquelle il est associé dans lequel une donnée peut être écrite, le contrôleur comportant en outre un module (24) de gestion d'écritures, conçu pour écrire des données reçues des sources ($12_1$, ..., $12_i$, ..., $12_n$) dans les mémoires tampons circulaires correspondantes aux adresses indiquées par les pointeurs d'écriture (PE1, PE2) correspondants, et des moyens (24, 30, $40_1$, ..., $40_i$, ..., $40_n$) de blocage en lecture, respectivement en écriture, dans chaque mémoire tampon circulaire en fonction des positions relatives des emplacements élémentaires indiqués par ledit pointeur de lecture (PL1, PL2) et ledit pointeur d'écriture 'PE1, PE2) de chaque mémoire tampon circulaire.

4. Contrôleur d'accès direct en mémoire (10, 20) selon la revendication 3, dans lequel les moyens de blocage en lecture (30, $40_1$, ..., $40_i$, ..., $40_n$) dans l'une quelconque des mémoires tampons circulaires ($16_1$, ..., $16_i$, ..., $16_n$) sont conçus pour bloquer toute lecture de donnée dans cette mémoire tampon circulaire lorsqu'une mise à jour de son pointeur de lecture (PL1, PL2) fait que l'adresse vers laquelle il pointe atteint ou dépasse l'adresse vers laquelle pointe son pointeur d'écriture (PE1, PE2), et dans lequel les moyens de blocage en écriture (24, $40_1$, ..., $40_i$, ..., $40_n$) dans l'une quelconque des mémoires tampons circulaires ($16_1$, ..., $16_i$, ..., $16_n$) sont conçus pour bloquer toute écriture de donnée dans cette mémoire tampon circulaire lorsqu'une mise à jour de son pointeur d'écriture (PE1, PE2) fait que l'adresse vers laquelle il pointe atteint ou dépasse l'adresse vers laquelle pointe son pointeur de lecture (PL1, PL2).

5.  Contrôleur d'accès direct en mémoire (10, 20) selon la revendication 3 ou 4, dans lequel les moyens de stockage (38) comportent en outre, pour chaque mémoire tampon circulaire ($16_1$, ..., $16_i$, ..., $16_n$), un pointeur de lecture dit « pointeur de travail » (PT1, PT2), différent dudit pointeur de lecture (PL1, PL2) associé à cette mémoire tampon circulaire, ce pointeur de travail (PT1, PT2) indiquant un emplacement élémentaire de la mémoire tampon à laquelle il est associé dans lequel une donnée doit être lue, le micrologiciel associé à cette mémoire tampon circulaire étant en outre conçu pour la mise à jour du pointeur de travail à chaque lecture dans cette mémoire tampon circulaire, selon une logique de mise à jour prédéterminée.

6.  Contrôleur d'accès direct en mémoire (10, 20) selon la revendication 5, dans lequel la logique de mise à jour prédéterminée pour le pointeur de travail (PT1, PT2) de chaque mémoire tampon circulaire comporte au moins un saut d'adresse dans cette mémoire tampon circulaire de manière à lire les données qu'elle contient dans un ordre différent de celui dans lequel elles ont été écrites.

7.  Procédé de transfert de données depuis plusieurs sources ($12_1$, ..., $12_i$, ..., $12_n$) de données vers au moins un destinataire (14) de ces données, via plusieurs mémoires tampons ($16_1$, ..., $16_i$, ..., $16_n$) comprenant chacune un nombre prédéterminé d'emplacements élémentaires de mémoire successifs, par un contrôleur d'accès direct en mémoire (10, 20) selon l'une quelconque des revendications 1 à 6, **caractérisé en ce que**, chaque donnée reçue de l'une quelconque des sources étant transmise (106) par un module (24) de gestion d'écritures vers une mémoire tampon associée à cette source et chaque donnée à transmettre au destinataire (14) étant lue (118, 220) dans l'une des mémoires tampons par le contrôleur, il comporte les étapes suivantes :

- pour chaque mémoire tampon, exécution (112, 212) par le contrôleur d'un micrologiciel ($40_1$, $40_2$) de lecture de données de cette mémoire tampon et de mise à jour d'un pointeur de lecture indiquant un emplacement élémentaire de cette mémoire tampon dans lequel une donnée peut être lue, et

- synchronisation (122, 124, 214, 224) de l'exécution des micrologiciels ($40_1$, $40_2$) en fonction d'un ordre prédéterminé des données issues des mémoires tampons souhaité dans la séquence de données à transférer au destinataire (14).

8.  Procédé de transfert de données selon la revendication 7, dans lequel l'étape de synchronisation (122, 124, 214, 224) est réalisée par une circulation programmée d'au moins un droit de lecture et de mise à jour entre les différents micrologiciels en cours d'exécution, la détention temporaire du droit de lecture et de mise à jour par l'un des micrologiciels en cours d'exécution lui permettant d'exécuter au moins une lecture de donnée dans la mémoire tampon à laquelle il est associé et au moins une mise à jour du pointeur de lecture correspondant.

9.  Procédé de transfert de données selon la revendication 8, dans lequel la circulation programmée du droit de lecture et de mise à jour entre les différents micrologiciels en cours d'exécution est réalisée de la façon suivante :

- chaque exécution de micrologiciel comporte au moins une étape (124, 214) d'attente du droit de lecture et de mise à jour selon une instruction programmée dans ce micrologiciel,
- chaque exécution de micrologiciel comporte au moins une une étape (122, 224) de transmission du droit de lecture et de mise à jour à un autre micrologiciel en cours d'exécution après l'exécution d'au moins une lecture et d'au moins une mise à jour du pointeur de lecture associé à ce micrologiciel, selon une instruction programmée de ce micrologiciel.

10. Programme d'ordinateur téléchargeable depuis un réseau de communication et/ou enregistré sur un support lisible par ordinateur et/ou exécutable par un contrôleur d'accès direct en mémoire (10, 20), **caractérisé en ce qu'**il comprend des instructions de code de programme pour l'exécution des étapes d'un procédé de transfert de données selon l'une quelconque des revendications 7 à 9 lorsque ledit programme est exécuté par un contrôleur d'accès direct en mémoire.

## Claims

1. Direct memory access controller (10, 20) for transferring data from several data sources ($12_1$, ..., $12_i$, ..., $12_n$) to at least one addressee (14) for these data, through several buffer memories ($16_1$, ..., $16_i$, ..., $16_n$) each comprising a predetermined number of successive elementary memory locations, the access controller comprising a read management module (30) designed to read data stored in the buffer memories ($16_1$, ..., $16_i$, ..., $16_n$) and to transfer them in sequence to the addressee (14) and read pointers (PL1, PL2) storage means (38) associated respectively with each buffer memory, each read pointer indicating an elementary location of the buffer memory with which it is associated and in which data can be read, **characterised in that** the buffer memories ($16_1$, ..., $16_i$, ..., $16_n$) are associated respectively with each data source ($12_1$, ..., $12_i$, ..., $12_n$) and for each buffer memory the controller (10, 20) comprises means of executing a firmware ($40_1$, ..., $40_i$, ..., $40_n$) to read data and update the read pointer associated with this buffer memory, and **in that** it comprises means (30, $40_1$, ..., $40_i$, ..., $40_n$) of synchronising execution of the firmwares as a function of a predetermined order of data originating from buffer memories required in the data sequence to be transferred to the addressee.

2. Direct memory access controller (10, 20) according to claim 1, wherein the synchronisation means (30, $40_1$, ..., $40_i$, ..., $40_n$) comprise means of transmitting at least one read and update right from one firmware to another, wherein temporarily holding a read and update right by one firmware ($40_1$, ..., $40_i$, ..., $40_n$) currently being executed enables the latter to execute at least one data read in the buffer memory ($16_1$, ..., $16_i$, ..., $16_n$) with which it is associated and at least one update of the corresponding read pointer (PL1, PL2).

3. Direct memory access controller (10, 20) according to claim 1 or 2, wherein each buffer memory ($16_1$, ..., $16_i$, ..., $16_n$) is circular, each elementary location of any one of the circular buffer memories being identified by an address between a base address (PB1, PB2) and a top address (PS1, PS2) of this circular buffer memory, the storage means (38) comprise write pointers (PE1, PE2) associated with each circular buffer memory and each indicating an elementary location of the buffer memory with which it is associated in which data can be written, the controller also comprises a write management module (24) designed to write data received from sources ($12_1$, ..., $12_i$, ..., $12_n$) in the corresponding circular buffer memories at the addresses indicated by the corresponding write pointers (PE1, PE2), and read, respectively write, blocking means (24, 30, $40_1$, ...,

$40_i$, ..., $40_n$) in each circular buffer memory as a function of the relative positions of the elementary locations indicated by said read pointer (PL1, PL2) and said write pointer (PE1, PE2) of each circular buffer memory.

4. Direct memory access controller (10, 20) according to claim 3, wherein the read blocking means (30, $40_1$, ..., $40_i$, ..., $40_n$) in any one of the circular buffer memories ($16_1$, ..., $16_i$, ..., $16_n$) are designed to block any data read in this circular buffer memory when an update to its read pointer (PL1, PL2) means that the address to which it points reaches or goes beyond the address to which its write pointer (PE1, PE2) points, and wherein the write blocking means (24, $40_1$, ..., $40_i$, ..., $40_n$) in any one of the circular buffer memories ($16_1$, ..., $16_i$, ..., $16_n$) are designed to block any data write in this circular buffer memory when an update to its write pointer (PE1, PE2) means that the address to which it points reaches or goes beyond the address to which its read pointer (PL1, PL2) points.

5. Direct memory access controller (10, 20) according to claim 3 or 4, wherein, for each circular buffer memory ($16_1$, ..., $16_i$, ..., $16_n$) the storage means (38) also comprise a read pointer called a "working pointer" (PT1, PT2), different from said read pointer (PL1, PL2) associated with this circular buffer memory, this working pointer (PT1, PT2) indicating an elementary location of the buffer memory with which it is associated in which data must be read, the firmware associated with this circular buffer memory also being designed to update the working pointer at each read in this circular buffer memory , using a predetermined update logic.

6. Direct access memory controller (10, 20) according to claim 5, wherein the predetermined update logic for the working pointer (PT1, PT2) of each circular buffer memory comprises at least one address jump in this circular buffer memory so as to read the data contained in it in an order different from that in which the data were written.

7. Method for transferring data from several sources ($12_1$, ..., $12_i$, ..., $12_n$) to at least one addressee (14) of these data, through several buffer memories ($16_1$, ..., $16_i$, ..., $16_n$) each comprising a predetermined number of successive elementary memory locations, by a direct memory access controller (10, 20) according to any one of claims 1 to 6, **characterised in that**, each data received from any one of the sources being transmitted (106) by a write management module (24) to a buffer memory associated with this source and each data to be transmitted to the addressee (14) being read (118, 220) in one of the buffer memories by the controller, it comprises the following steps:

- for each buffer memory, execution (112, 212), by the controller, of a firmware ($40_1$, $40_2$) to read the data from this buffer memory and to update a read pointer indicating an elementary location in this buffer memory in which data can be read, and
- synchronisation (122, 124, 214, 224) of execution of the firmwares ($40_1$, $40_2$) as a function of a predetermined order of data derived from buffer memories required in the data sequence to be transferred to the addressee (14).

8. Method for transferring data according to claim 7, wherein the synchronisation step (122, 124, 214, 224) is done by a programmed circulation of at least one read and update right between the different firmwares currently being executed, wherein temporary holding the read and update right by one of the firmwares currently being executed enables the latter to execute at least one data read in the buffer memory with which it is associated, and at least one update of the corresponding read pointer.

9. Method for transferring data according to claim 8, wherein the programmed circulation of the read and update right between the different firmwares currently being executed is done as follows:

- each firmware execution comprises at least one step (124, 214) to wait for the read and update right according to a programmed instruction in this firmware,
- each firmware execution comprises at least one step (122, 224) to transmit the read and update right to another firmware currently being executed after execution of at least one read and at least one update of the read pointer associated with this firmware, in accordance with a programmed instruction of this firmware.

10. Computer program that can be downloaded from a communication network and/or recorded on a medium that can be read by a computer and/or executed by a direct memory access controller (10, 20), **characterised in that** it comprises program code instructions for execution of the steps in a data transfer method according to any one of claims 7 to 9 when said program is executed by a direct memory access controller.

**Patentansprüche**

1. Direktspeicherzugriff-Steuereinheit (10, 20) für die Übertragung von Daten von mehreren Datenquellen ($12_1$, ..., $12_i$,..., $12_n$) zu mindestens einem Empfänger (14) dieser Daten über mehrere Pufferspeicher ($16_1$, ..., $16_i$, ..., $16_n$), die jeweils eine vorbestimmte Anzahl von aufeinanderfolgenden elementaren Speicherstellen aufweisen, wobei die Zugriffssteuereinheit ein Modul (30) zur Steuerung von Lesevorgängen, das so ausgelegt ist, dass es in den Pufferspeichern ($16_1$, ..., $16_i$, ..., $16_n$) gespeicherte Daten liest und sequentiell zum Empfänger (14) leitet, sowie Mittel (38) zum Speichern von Lesezeigern (PL1, PL2) aufweist, die jeweils jedem Pufferspeicher zugeordnet sind, wobei jeder Lesezeiger eine elementare Stelle des ihm zugeordneten Pufferspeichers angibt, an der Daten gelesen werden können, **dadurch gekennzeichnet, dass** die Steuereinheit (10, 20) für jeden Pufferspeicher Mittel zur Ausführung einer Firmware ($40_1$, ..., $40_i$, ..., $40_n$) zum Lesen von Daten und zur Aktualisierung des diesem Pufferspeicher zugeordneten Lesezeigers und Mittel ($30$, $40_1$, ..., $40_i$, ..., $40_n$) zur Synchronisierung der Ausführung der Firmwares in Abhängigkeit von einer vorbestimmten Reihenfolge der Daten aus den Pufferspeichern aufweist, die in der zum Empfänger zu leitenden Datensequenz gewünscht ist, wobei die Pufferspeicher ($16_1$, ..., $16_i$, ..., $16_n$) jeweils jeder Datenquelle ($12_1$, ..., $12_i$,..., $12_n$) zugeordnet sind.

2. Direktspeicherzugriff-Steuereinheit (10, 20) nach Anspruch 1, bei der die Synchronisierungsmittel ($30$, $40_1$, ..., $40_i$, ..., $40_n$) Mittel zur Übertragung mindestens eines Lese- und Aktualisierungsrechts von einer Firmware zu einer anderen aufweisen, wobei der vorübergehende Besitz des Lese- und Aktualisierungsrechts durch eine der gegenwärtig ausgeführten Firmwares ($40_1$, ..., $40_i$, ..., $40_n$) es ihr ermöglicht, mindestens einen Datenlesevorgang in dem Pufferspeicher ($16_1$, ..., $16_i$, ..., $16_n$), dem sie zugeordnet ist, und eine Aktualisierung des entsprechenden Lesezeigers (PL1, PL2) auszuführen.

3. Direktspeicherzugriff-Steuereinheit (10, 20) nach Anspruch 1 oder 2, bei der jeder Pufferspeicher ($16_1$, ..., $16_i$, ..., $16_n$) ein Ringpufferspeicher ist, wobei jede elementare Stelle eines beliebigen Ringpufferspeichers durch eine Adresse identifiziert wird, die zwischen einer Basisadresse (PB1, PB2) und einer Endadresse (PS1, PS2) dieses Ringpufferspeichers enthalten ist, die Speichermittel (38) Schreibzeiger (PE1, PE2) aufweisen, die jeweils jedem Ringpufferspeicher zugeordnet sind und jeweils eine elementare Stelle des Pufferspeichers, dem sie zugeordnet sind, angeben, an der Daten geschrieben werden können, wobei die Steuereinheit ferner ein Modul (24) zur Steuerung von Schreibvorgängen aufweist, das so ausgelegt ist, dass es von den Quellen ($12_1$, ..., $12_i$,..., $12_n$) empfangene Daten in die entsprechende Ringpufferspeicher an den von den entsprechenden Schreibzeigern (PE1, PE2) angegebenen Adressen schreibt, sowie Mittel (24, 30,

$40_1$, ..., $40_i$, ..., $40_n$) zur Blockierung von Lese- bzw. Schreibvorgängen in jedem Ringpufferspeicher in Abhängigkeit von den relativen Positionen der elementaren Stellen, die von dem Lesezeiger (PL1, PL2) und dem Schreibzeiger (PE1, PE2) jedes Ringpufferspeichers angegeben werden.

4. Direktspeicherzugriff-Steuereinheit (10, 20) nach Anspruch 3, bei der die Leseblockierungsmittel (30, $40_1$, ..., $40_i$, ..., $40_n$) in einem beliebigen Ringpufferspeicher ($16_1$, ..., $16_i$, ..., $16_n$) so ausgelegt sind, dass sie jeden Datenlesevorgang in diesem Ringpufferspeicher blockieren, wenn eine Aktualisierung seines Lesezeigers (PL1, PL2) dazu führt, dass die Adresse, auf die er verweist, die Adresse erreicht oder überschreitet, auf die sein Schreibzeiger (PE1, PE2) verweist, und bei der die Schreibblockierungsmittel (24, $40_1$, ..., $40_i$, ..., $40_n$) in einem beliebigen Ringpufferspeicher ($16_1$, ..., $16_i$, ..., $16_n$) so ausgelegt sind, dass sie jeden Datenschreibvorgang in diesem Ringpufferspeicher blockieren, wenn eine Aktualisierung seines Schreibzeigers (PE1, PE2) dazu führt, dass die Adresse, auf die er verweist, die Adresse erreicht oder überschreitet, auf die sein Lesezeiger (PL1, PL2) verweist.

5. Direktspeicherzugriff-Steuereinheit (10, 20) nach Anspruch 3 oder 4, bei der die Speichermittel (38) für jeden Ringpufferspeicher ($16_1$, ..., $16_i$, ..., $16_n$) ferner einen "Arbeitszeiger" (PT1, PT2) genannten Lesezeiger aufweisen, der sich von dem Lesezeiger (PL1, PL2) unterscheidet, der diesem Ringpufferspeicher zugeordnet ist, wobei dieser Arbeitszeiger (PT1, PT2) eine elementare Stelle des Ringpufferspeichers, dem er zugeordnet ist, angibt, an der Daten zu lesen sind, wobei die diesem Ringpufferspeicher zugeordnete Firmware ferner so ausgelegt ist, das sie den Arbeitszeiger bei jedem Lesevorgang in diesem Ringpufferspeicher entsprechend einer vorbestimmten Aktualisierungslogik aktualisiert.

6. Direktspeicherzugriff-Steuereinheit (10, 20) nach Anspruch 5, bei der die vorbestimmte Aktualisierungslogik für den Arbeitszeiger (PT1, PT2) jedes Ringpufferspeichers mindestens einen Adressensprung in diesem Ringpufferspeicher aufweist, so dass Daten, die er enthält, in einer Reihenfolge gelesen werden, die sich von der Reihenfolge, in der sie geschrieben wurden, unterscheidet.

7. Verfahren zum Übertragen von Daten von mehreren Datenquellen ($12_1$, ..., $12_i$, ..., $12_n$) zu mindestens einem Empfänger (14) dieser Daten über mehrere Pufferspeicher ($16_1$, ..., $16_i$, ..., $16_n$), die jeweils eine vorbestimmte Anzahl von aufeinanderfolgenden elementaren Speicherstellen aufweisen, mittels einer Direktspeicherzugriff-Steuereinheit (10, 20) nach einem der Ansprüche 1 bis 6, **dadurch gekennzeich-**

**net, dass** es die folgenden Schritte umfasst, wobei alle von einer der Quellen empfangenen Daten über ein Modul (24) zur Steuerung von Schreibvorgängen zu einem dieser Quelle zugeordneten Pufferspeicher übertragen (106) werden und alle Daten, die zum Empfänger (14) zu leiten sind, in einem der Pufferspeicher von der Steuereinheit gelesen (118, 120) werden:

- für jeden Pufferspeicher Ausführen (112, 212) durch die Steuereinheit einer Firmware ($40_1$, $40_2$) zum Lesen von Daten aus diesem Pufferspeicher und zur Aktualisierung eines Lesezeigers, der eine elementare Stelle dieses Pufferspeichers angibt, an der Daten gelesen werden können, und
- Synchronisieren (122, 124, 214, 224) der Ausführung der Firmwares ($40_1$, $40_2$) in Abhängigkeit von einer vorbestimmten Reihenfolge der Daten aus den Pufferspeichern, die in der zum Empfänger (14) zu leitenden Datensequenz gewünscht ist.

8. Verfahren zur Datenübertragung nach Anspruch 7, bei dem der Synchronisierungsschritt (122, 124, 214, 224) durch eine programmierte Zirkulation mindestens eines Lese- und Aktualisierungsrechts zwischen den verschiedenen Firmwares, die gegenwärtig ausgeführt werden, realisiert wird, wobei der vorübergehende Besitz des Lese- und Aktualisierungsrechts durch eine der gegenwärtig ausgeführten Firmwares es ihr ermöglicht, mindestens einen Datenlesevorgang in dem Pufferspeicher, dem sie zugeordnet ist, und mindestens eine Aktualisierung des entsprechenden Lesezeigers auszuführen.

9. Verfahren zur Datenübertragung nach Anspruch 8, bei dem die programmierte Zirkulation des Lese- und Aktualisierungsrechts zwischen den verschiedenen gegenwärtig ausgeführten Firmwares wie folgt realisiert wird:

- jede Firmwareausführung umfasst mindestens einen Schritt (124, 214), bei dem entsprechend einem in dieser Firmware programmierten Befehl auf das Lese- und Aktualisierungsrecht gewartet wird,
- jede Firmwareausführung umfasst mindestens einen Schritt (122, 224), bei dem entsprechend einem in dieser Firmware programmierten Befehl das Lese- und Aktualisierungsrecht zu einer weiteren gegenwärtig ausgeführten Firmware geleitet wird, nachdem mindestens ein Lesevorgang und mindestens eine Aktualisierung des dieser Firmware zugeordneten Zeigers ausgeführt wurde.

10. Computerprogramm, das von einem Kommunikationsnetzwerk heruntergeladen werden kann und/ oder auf einem computerlesbaren Träger gespeichert ist und/oder durch eine Direktspeicherzugriff-Steuereinheit (10, 20) ausgeführt werden kann, **dadurch gekennzeichnet, dass** es Programmcodebefehle für die Ausführung der Schritte eines Verfahrens zur Datenübertragung nach einem der Ansprüche 7 bis 9 aufweist, wenn das Programm von einer Direktspeicherzugriff-Steuereinheit ausgeführt wird.

## Figure 1

## Figure 2

PB1    PL1    PT1              PE1              PS1

_Figure 3A_

PB2          PE2    PT2          PL2    PS2

_Figure 3B_

## Figure 4

**RÉFÉRENCES CITÉES DANS LA DESCRIPTION**

**Documents brevets cités dans la description**

- US 5901291 A